# EUROPÄISCHE PATENTANMELDUNG

(11) **EP 4 563 222 A1**
(43) Veröffentlichungstag der Anmeldung: **04.06.2025**
(21) Anmeldenummer: 23212511.2
(22) Anmeldetag: 28.11.2023
(51) Int. Cl.: B01J 8/02, B01J 8/08, B01J 8/00, B01J 19/24

(54) **VORRICHTUNG UND VERFAHREN FÜR DIE SPEICHERUNG UND DEN TRANSPORT VON CHEMISCHER ENERGIE ZUR ERZEUGUNG VON WASSERSTOFF**

(71) Anmelder: ThyssenKrupp Steel Europe AG, 47166 Duisburg (DE); Leibniz-Institut für Werkstofforientierte Technologien - IWT, 28359 Bremen (DE); Technische Universität Clausthal, 38678 Clausthal-Zellerfeld (DE); Universität Duisburg-Essen, 45141 Essen (DE)
(72) Erfinder: DEIKE, Rüdiger, 47119 Duisburg (DE); SPITZER, Karl-Heinz, 38678 Clausthal-Zellerfeld (DE); HILS, Gereon, 38678 Clausthal-Zellerfeld (DE); FECHTE-HEINEN, Rainer, 28359 Bremen (DE); WEINBERG, Matthias, 47809 Krefeld (DE)
(74) Vertreter: Zenz Patentanwälte Partnerschaft mbB

(57) **Zusammenfassung**

Die Erfindung betrifft eine Reaktionsvorrichtung (1) zur Gewinnung von Wasserstoff, aufweisend ein transportabel und isoliert ausgebildetes Behältnis (2) mit einem Innenraum (3), welcher von Seitenwände (4), einer Bodenwandung (5) und einer Deckenwandung (6) begrenzt ist, wenigstens eine Reaktionsmittel-Schicht (8), welche zwischen Metall und Metalloxid reversibel wandelbar, wiederverwendbar und gasdurchströmbar ausgebildet ist und welche sich quer zur Bodenwandung (5) zwischen den Seitenwänden (4) erstreckt, eine zur Zuführung und Verteilung eines Reaktionsgases in den Innenraum (3) ausgebildete Reaktionsgas-Zuführleitung (9), welche im Bereich der Bodenwandung (5) mündet, eine zur Abführung des in dem Innenraum (3) ausreagierten Reaktionsgases ausgebildete Reaktionsgas-Abführleitung (10), welche im Bereich der Deckenwandung (6) angeordnet ist, eine zur Zuführung und Verteilung eines ersten Zusatz-Reaktionsgases ausgebildete erste Zusatz-Reaktionsgas-Zuführleitung (11), welche im Bereich der Bodenwandung (5) mündet, eine zur Zuführung und Verteilung eines zweiten Zusatz-Reaktionsgases ausgebildete zweite Zusatz-Reaktionsgas-Zuführleitung (12), welche im Bereich der Bodenwandung (5) mündet, und eine zur steuerbaren und/oder regelbaren Zuführung und Verteilung eines dritten Zusatz-Reaktionsgases ausgebildete dritte Zusatz-Reaktionsgas-Zuführleitung (14), welche an oder im Bereich der Bodenwandung (5) mündet.

## Beschreibung

Die Erfindung betrifft eine Reaktionsvorrichtung zur Gewinnung von Wasserstoff. Ebenso betrifft die vorliegende Erfindung ein Wasserstoff-Gewinnungssystem mit wenigstens drei solcher Reaktionsvorrichtungen. Schließlich betrifft die vorliegende Erfindung ein Verfahren zur Gewinnung von Wasserstoff durch Umwandeln von reversibel wandelbaren Reaktionsmittel-Schichten.

Wasserstoff besitzt eine stetig wachsende Bedeutung als Ausgangsstoff in vielen Industrieprozessen, als flexibler Energieträger oder im Bereich der Mobilität und wird heute überwiegend in industriell etablierten Prozessen hergestellt, die sich fossiler Rohstoffe bedienen und proportional zu den produzierten Mengen an Wasserstoff erhebliche CO₂-Emissionen verursachen. Eine Möglichkeit zur Reduzierung oder sogar Vermeidung der erheblichen CO₂-Emissionen ist durch den sogenannten grünen Wasserstoff gegeben, welcher mit Hilfe von regenerativem Strom per Elektrolyse von Wasser produziert wird. Als Nebenprodukt entsteht lediglich Sauerstoff, der in die Luft abgeführt oder anderweitig genutzt wird. So wird auch in dem hier betrachteten Prozess optional Sauerstoff für eine partielle Oxidation des Wasserstoffs verwendet, um die erforderliche Energie für die Materialerwärmung und die endothermen Reduktionsprozesse bereitzustellen. Alternativ kann die vorgenannte erforderliche Energie auch in Form anderer Wärmequellen bereitgestellt werden, wie zum Beispiel durch so genannte Abwärme anderweitiger industrieller Prozesse. Grüner bzw. regenerativ erzeugter Wasserstoff ist deshalb CO₂-frei. Zur Erreichung dieser CO₂-Freiheit wird 100% regenerativer Strom benötigt, was jedoch länder- und regionsabhängig schwer umzusetzen ist, weil dafür ein enormer Ausbau der regenerativen Energieerzeugung nötig ist und die Flächenkapazitäten beispielsweise in Deutschland dafür nicht ohne weiteres bereitgestellt werden können. Daher wird derzeit ergründet, aus welchen Ländern der Welt unter anderem grüner Wasserstoff geliefert werden könnte. Im Fokus für die Produktionsstandorte von grünem Wasserstoff stehen beispielsweise nordafrikanische Regionen, denn dort gibt es Sonne im Überfluss, so dass Solarstrom zu geringen Kosten erzeugbar ist. Diese Vorteile der CO₂-freien Gewinnung von regenerativ erzeugtem Wasserstoff stehen den Herausforderungen gegenüber, welche Wasserstoff hinsichtlich seiner Lagerung und seines Transports aufweist. Denn Wasserstoff ist hochentzündlich, leicht flüchtig und versprödet viele Materialien und kondensiert erst bei -252°C zu einer Flüssigkeit. Diese Kombination macht den Transport sowie die Lagerung bisher schwierig.

Der Erfindung liegt die Aufgabe zugrunde, eine Lösung zu schaffen, die auf konstruktiv einfache Weise und kostengünstig eine vereinfachte und umweltfreundliche Möglichkeit zur Lagerung und zum Transport von regenerativ erzeugter Energie für die nachfolgende Gewinnung von Wasserstoff bereitstellt. Insbesondere soll mit Hilfe der Erfindung die Lagerung auch langfristig ohne oder nur mit vergleichsweise geringen energetischen Verlusten einhergehen, wobei der Transport auch über weite Distanzen mit bestehenden Technologien relativ einfach zu bewältigen sein soll.

Diese Aufgabe wird erfindungsgemäß gelöst durch eine Reaktionsvorrichtung mit den Merkmalen gemäß dem Patentanspruch 1.

Die erfindungsgemäße Reaktionsvorrichtung zur Gewinnung von Wasserstoff umfasst ein transportabel und isoliert ausgebildetes Behältnis mit einem Innenraum, welcher von Seitenwände, einer Bodenwandung und einer Deckenwandung begrenzt ist, wenigstens eine reversibel wandelbare Reaktionsmittel-Schicht, welche zwischen Metall und Metalloxid reversibel wandelbar, wiederverwendbar und gasdurchströmbar ausgebildet ist und welche sich quer zur Bodenwandung zwischen den Seitenwänden erstreckt, eine zur steuerbaren und/oder regelbaren Zuführung und Verteilung eines Reaktionsgases in den Innenraum ausgebildete Reaktionsgas-Zuführleitung, welche an oder im Bereich der Bodenwandung mündet, eine zur Abführung des in dem Innenraum ausreagierten bzw. erwärmten oder abgekühlten Reaktionsgases ausgebildete Reaktionsgas-Abführleitung, welche an oder im Bereich der Deckenwandung angeordnet ist, eine zur steuerbaren und/oder regelbaren Zuführung und Verteilung eines ersten Zusatz-Reaktionsgases ausgebildete erste Zusatz-Reaktionsgas-Zuführleitung, welche an oder im Bereich der Bodenwandung mündet, eine zur steuerbaren und/oder regelbaren Zuführung und Verteilung eines zweiten Zusatz-Reaktionsgases ausgebildete zweite Zusatz-Reaktionsgas-Zuführleitung, welche an oder im Bereich der Bodenwandung mündet, und eine zur steuerbaren und/oder regelbaren Zuführung und Verteilung eines dritten Zusatz-Reaktionsgases ausgebildete dritte Zusatz-Reaktionsgas-Zuführleitung, welche an oder im Bereich der Bodenwandung mündet.

Ebenso wird die der Erfindung zugrunde liegende Aufgabe durch ein Wasserstoff-Gewinnungssystem mit den Merkmalen gemäß Patentanspruch 11 gelöst.

Das erfindungsgemäße Wasserstoff-Gewinnungssystem weist wenigstens drei Reaktionsvorrichtungen nach einem der Ansprüche 1 bis 10 auf, wobei die Reaktionsgas-Zuführleitung der zweiten Reaktionsvorrichtung mit der Reaktionsgas-Abführleitung der ersten Reaktionsvorrichtung verbunden ist, und wobei die Reaktionsgas-Zuführleitung der dritten Reaktionsvorrichtung mit der Reaktionsgas-Abführleitung der zweiten Reaktionsvorrichtung verbunden ist.

Schließlich wird die der Erfindung zugrunde liegende Aufgabe durch ein Verfahren zur Gewinnung von Wasserstoff durch Umwandeln von wenigstens einer Reaktionsmittel-Schicht mit den Merkmalen gemäß Patentanspruch 12 gelöst.

Das erfindungsgemäße Verfahren zur Gewinnung von Wasserstoff durch Umwandeln von reversibel wandelbaren Reaktionsmittel-Schichten wird mit wenigstens drei Reaktionsvorrichtungen nach einem der Ansprüche 1 bis 10 als ein Wasserstoff-Gewinnungssystem nach Anspruch 11 betrieben, wobei eine erste Reaktionsvorrichtung der wenigstens drei Reaktionsvorrichtungen zum Auskoppeln aus dem System vorbereitet wird, wobei bei einer zweiten Reaktionsvorrichtung der wenigstens drei Reaktionsvorrichtungen die wenigstens eine Reaktionsmittel-Schicht umgewandelt wird, wobei bei einer dritten Reaktionsvorrichtung der wenigstens drei Reaktionsvorrichtungen die wenigstens eine Reaktionsmittel-Schicht zum Umwandeln vorbereitet wird, wobei zum Umwandeln über die erste Zusatz-Reaktionsgas-Zuführleitung der zweiten Reaktionsvorrichtung das erste Zusatz-Reaktionsgas gesteuert und/oder geregelt zugeführt werden/wird, wobei zum Umwandeln über die zweite Zusatz-Reaktionsgas-Zuführleitung der zweiten Reaktionsvorrichtung das zweite Zusatz-Reaktionsgas gesteuert und/oder geregelt zugeführt werden/wird, und wobei die wenigstens drei Reaktionsvorrichtungen derart in Reihe geschaltet werden, dass die Reaktionsgas-Zuführleitung der zweiten Reaktionsvorrichtung mit der Reaktionsgas-Abführleitung der ersten Reaktionsvorrichtung verbunden wird und die Reaktionsgas-Zuführleitung der dritten Reaktionsvorrichtung mit der Reaktionsgas-Abführleitung der zweiten Reaktionsvorrichtung verbunden wird, wodurch die zweite Reaktionsvorrichtung mit aufgeheiztem bzw. vorgewärmtem Reaktionsgas der ersten Reaktionsvorrichtung versorgt wird und die dritte Reaktionsvorrichtung zur Vorwärmung mit ausreagiertem Reaktionsgas der zweiten Reaktionsvorrichtung versorgt wird. Erfindungsgemäß wird das Reaktionsgas entgegen der Reihenfolge, in welcher die Reaktionsvorrichtungen den Prozess durchlaufen, geführt, so dass der Gesamtprozess nach einem Gegenstromprinzip durchgeführt wird. Im Sinne der Erfindung ist mit einem "Auskoppeln" eine stoffflussmäßige Trennung einer Reaktionsvorrichtung aus dem Wasserstoff-Gewinnungssystem gemeint, so dass etwaige Leitungen zu und von der "auszukoppelnden" Reaktionsvorrichtung geschlossen werden, wobei unter dem Begriff "Auskoppeln" auch eine mechanische Trennung und räumliche Separierung der "auszukoppelnden" Reaktionsvorrichtung aus dem Wasserstoff-Gewinnungssystem denkbar ist, was eine stoffflussmäßige Trennung der "auszukoppelnden" Reaktionsvorrichtung mitumfasst.

Vorteilhafte und zweckmäßige Ausgestaltungen und Weiterbildungen der Erfindung ergeben sich aus den entsprechenden Unteransprüchen.

Durch die Erfindung wird eine Möglichkeit bereitgestellt, mit welcher auf umweltfreundliche Weise regenerativ erzeugte chemische Energie gelagert und transportiert werden kann mit der energieeffizient Wasserstoff gewonnen werden kann. Im Sinne der Erfindung sind hierbei eine "Lagerung" als ein Einlagern von chemischer Energie in die wenigstens eine Reaktionsmittel-Schicht durch einen mit Wasserstoff betriebenen Reduktionsprozess und eine "Gewinnung" als ein Ausspeichern der chemischen Energie durch Oxidation der Reaktionsmittelschicht mit Wasserdampf unter Bildung von Wasserstoff zu verstehen ist. Im Hinblick auf die Erfindung kann an einem sonnenreichen Ort mit hoher verfügbarer regenerativer Energie, wie zum Beispiel auf dem afrikanischen Kontinent, in Australien oder Südamerika grüner bzw. regenerativ erzeugter Wasserstoff hergestellt werden. Denn an diesen Orten liefern beispielsweise Photovoltaikanlagen elektrische Energie, welche genutzt wird, um Wasser in Sauerstoff und Wasserstoff aufzuspalten. Durch Direktreduktion der wenigstens einen reversibel wandelbaren Reaktionsmittel-Schicht der erfindungsgemäßen Reaktionsvorrichtung wird der regenerativ erzeugte Wasserstoff oder vielmehr das zu seiner Erzeugung erforderliche Reaktionspotenzial in die Reaktionsmittel-Schichten eingespeichert. Die nach Art eines Behälters ausgebildete Reaktionsvorrichtung kann dann anschließend ohne Umweltrisiko beispielsweise in Form von siloartigen Kolonnen, die ggf. auch fest auf verschiffbaren Plattformen installiert sein können, oder auch standardisierten Containern zur vereinfachten Nutzung entsprechender Logistik verschifft werden. Am Bestimmungsort wird dann die wenigstens eine reversibel wandelbare Reaktionsmittel-Schicht mit Wasserdampf oxidiert, wodurch Wasserstoff gebildet wird. Der Behälter bzw. die Reaktionsvorrichtung mit dem oxidierten Reaktionsmittel der Reaktionsmittel-Schicht tritt danach wieder die Rückreise zu dem Ort mit hoher verfügbarer regenerativer Energie an, so dass mittels der umgekehrten Reaktion in Form einer Reduktion die wenigstens eine Reaktionsmittel-Schicht für die erneute Wasserstoffgewinnung vorbereitet und anschließend die Reaktionsvorrichtung wieder verschifft werden kann. Folglich können die Reaktionsmittel-Schichten und damit die Reaktionsvorrichtung wiederverwendet werden, wodurch ein umweltfreundlicher Kreislauf entsteht. Der am sonnenreichen Ort der Reduktion zum Beispiel durch Elektrolyse gewonnene Wasserstoff kann zudem durch Sonnenkollektoren vorgewärmt werden, wodurch die Energieeffizienz des Systems weiter gesteigert wird.

Die Erfindung sieht in vorteilhafter Ausgestaltung der Reaktionsvorrichtung vor, dass einer Reaktionsmittel-Schicht der wenigstens einen Reaktionsmittel-Schicht ein Abstützungsboden zugeordnet ist, welcher die wenigstens eine Reaktionsmittel-Schicht abstützend und quer zur Bodenwandung lagert, wobei die Anzahl der Abstützungsböden der Anzahl an Reaktionsmittel-Schichten entspricht, und wobei bei mehr als einer Reaktionsmittel-Schicht die Abstützungsböden zwischen der Bodenwandung und der Deckenwandung beabstandet und übereinanderliegend zueinander angeordnet sind.

In weiterer Ausgestaltung der Erfindung ist es für die Prozessführung von Vorteil, wenn wenigstens ein Abstützungsboden mit einer ersten Querzuführleitung verbunden ist und zur zusätzlichen, steuerbaren und/oder regelbaren Einbringung des ersten Zusatz-Reaktionsgases in den Innenraum ausgebildet ist. Das erste Zusatz-Reaktionsgas kann zum Beispiel H₂ sein, wodurch sich die Reduktionsfähigkeit des gesamten Gasgemisches im Innenraum des Behältnisses einstellen lässt.

Ferner ist in Ausgestaltung der erfindungsgemäßen Reaktionsvorrichtung vorgesehen, dass wenigstens ein Abstützungsboden mit einer zweiten Querzuführleitung verbunden ist und zur zusätzlichen, steuerbaren und/oder regelbaren Einbringung des zweiten Zusatz-Reaktionsgases in den Innenraum ausgebildet ist. Das zweite Zusatz-Reaktionsgas kann beispielsweise O₂ sein, welches zur Erwärmung durch partielle Oxidation eingesetzt werden kann. Es sei angemerkt, dass für einen Reduktionsbetrieb der erfindungsgemäßen Reaktionsvorrichtung O₂ benötigt wird, um durch partielle Oxidation die benötigte Reaktionswärme bereitzustellen. Je wärmer das Reaktionsgas an dem Ort der Reduktion der Reaktionsmittel-Schicht bereitgestellt wird, desto geringer ist der Bedarf an O₂, was den Wirkungsgrad des Reduktionsbetriebs verbessert. Bei einem Oxidationsbetrieb der erfindungsgemäßen Reaktionsvorrichtung zur Wasserstoffgewinnung wird diese Reaktionswärme wieder frei und kann zum Beispiel zur Erzeugung des für den Oxidationsbetriebs benötigten Dampfes genutzt werden.

In einer weiteren Ausgestaltung der Reaktionsvorrichtung sieht die Erfindung vor, dass die dritte Zusatz-Reaktionsgas-Zuführleitung mit wenigstens einem Abstützungsboden verbunden ist, wobei der wenigstens eine Abstützungsboden zur zusätzlichen steuerbaren und/oder regelbaren Einbringung des dritten Zusatz-Reaktionsgases in den Innenraum ausgebildet ist. Hierbei kann beispielsweise das dritte Zusatz-Reaktionsgas H₂O sein, welches zum Beispiel in Form von Wasserdampf zum Heizen eingesetzt werden kann. Anzumerken ist hierbei, dass bei dem Oxidationsbetrieb der erfindungsgemäßen Reaktionsvorrichtung gegebenenfalls auch "kalter" Dampf zur Kühlung am Ort der exothermen Oxidation dienen kann, wodurch die Oxidationswärme optimal genutzt werden kann.

Ferner sieht die Erfindung in weiterer Ausgestaltung der Reaktionsvorrichtung vor, dass der wenigstens eine Abstützungsboden mit einer dritten, für eine steuerbare und/oder regelbare Abstützungsboden-Kühlung mit Hilfe eines Kühlmediums ausgebildete Querzuführleitung verbunden ist. Als Kühlmedium kann beispielsweise der Einfachheit halber Wasser verwendet werden. Anzumerken ist, dass durch diese Ausgestaltung Verdampfungswärme für den einzuleitenden Dampf gewonnen werden kann. Ferner kann der wenigstens eine Abstützungsboden auch zum Heizen bei der endothermen Reaktion genutzt werden.

Da im Betrieb der Reaktionsvorrichtung im Innenraum des Behältnisses sehr hohe Temperaturen vorherrschen, ist es in Ausgestaltung der Reaktionsvorrichtung von Vorteil, wenn der wenigstens eine Abstützungsboden aus einer oxidationsfesten und temperaturbeständigen Legierung besteht oder durch eine oxidationsfeste Schicht vom Innenraum des Behältnisses der Reaktionsvorrichtung separiert ist. Diesbezüglich ist es besonders vorteilhaft, wenn in Ausgestaltung der Reaktionsvorrichtung der wenigstens eine Abstützungsboden aus einer oxidationsbeständigen FeCrAl-Legierung besteht. Von Vorteil ist es auch, wenn in Ausgestaltung der Reaktionsvorrichtung eine mögliche keramische Beschichtung der Abstützungsböden bzw. das eingesetzte keramische Feuerfestmaterial allgemein einen Silikat-Anteil von weniger als 11,35 Vol.-% aufweist.

Bei der erfindungsgemäßen Reaktionsvorrichtung kann die wenigstens eine Reaktionsmittel-Schicht Eisen oder eine Legierung auf Eisenbasis sein.

In diesem Zusammenhang sieht die Erfindung für die Reaktionsvorrichtung ferner vor, dass die wenigstens eine Reaktionsmittel-Schicht als eine Schichtung aus Briketts und/oder Pellets aus einer Legierung auf Eisenbasis ausgebildet ist.

Zur Sicherstellung, dass das Reaktionsgas sowie die Zusatz-Reaktionsgase das Behältnis von der Bodenwandung bis zur Deckenwandung durchströmen, sieht die Erfindung in weiterer Ausgestaltung der Reaktionsvorrichtung vor, dass der wenigstens eine Abstützungsboden gasdurchlässig ausgebildet ist.

Zur Verringerung der thermischen Belastung der Bodenwandung sieht die Erfindung in weiterer Ausgestaltung der Reaktionsvorrichtung vor, dass auf der Bodenwandung eine Keramikschüttung aufliegt, in welcher die Reaktionsgas-Zuführleitung und/oder die erste Zusatz-Reaktionsgas-Zuführleitung und/oder die zweite Zusatz-Reaktionsgas-Zuführleitung und/oder die dritte Zusatz-Reaktionsgas-Zuführleitung münden/mündet.

Ebenso ist es aus Gründen der thermischen Belastung von Vorteil, wenn in Ausgestaltung der erfindungsgemäßen Reaktionsvorrichtung das Behältnis einen hochfesten, niedriglegierten Stahl aufweist, wobei genauer gesagt die Seitenwandungen und/oder die Bodenwandung und/oder die Deckenwandung aus einem hochfesten, niedriglegierten Stahl bestehen.

Zum Schutz der äußeren Umgebung und zur Minimierung der Wärmeverluste der Reaktionsvorrichtung sieht die Erfindung in weiterer Ausgestaltung vor, dass das Behältnis eine Auskleidung mit einer hochisolierenden Masse aufweist. Diesbezüglich kann dann in weiterer Ausgestaltung die hochisolierende Masse Blähkugeln aufweisen.

Hinsichtlich des erfindungsgemäßen Wasserstoff-Gewinnungssystems ist es für einen weltweiten Transport von erfindungsgemäßen Reaktionsvorrichtungen von Vorteil, wenn die wenigstens drei Reaktionsvorrichtungen auf einer offshore-fähigen und/oder hochseetauglichen Plattform und/oder in wenigstens einem standardisierten Container gelagert sind.

Hinsichtlich einer energieeffizienten Prozessführung sieht die Erfindung für das Verfahren in einer Ausgestaltung vor, dass bei dem Vorbereiten zum Auskoppeln der ersten Reaktionsvorrichtung das Reaktionsgas mit Hilfe der wenigstens einen Reaktionsmittel-Schicht aufgeheizt wird, und/oder wobei bei dem Vorbereiten zum Umwandeln die Reaktionsmittel-Schichten der dritten Reaktionsvorrichtung mit Hilfe des ausreagierten Reaktionsgases der zweiten Reaktionsvorrichtung aufgeheizt werden. Bei dem Vorbereiten zum Auskoppeln wird folglich der Wärmeaustausch zwischen dem Reaktionsgas und der heißen und umgewandelten Reaktionsmittel-Schichten ausgenutzt, wohingegen bei dem Vorbereiten zum Umwandeln der Wärmeaustausch zwischen dem heißen und ausreagierten Reaktionsgas und der umzuwandelnden Reaktionsmittel-Schichten ausgenutzt wird.

Die Erfindung sieht in Ausgestaltung des Verfahrens vor, dass beim Umwandeln die wenigstens eine Reaktionsmittel-Schicht der zweiten Reaktionsvorrichtung oxidiert wird, wobei der ersten Reaktionsvorrichtung H₂O als Reaktionsgas zugeführt wird und das aus der Reaktionsgas-Abführleitung der dritten Reaktionsvorrichtung stammende und ausreagierte Reaktionsgas H₂ mit noch verbliebenen Anteilen an H₂O ist. Für eine optimale Wärmerückgewinnung können mehrere nach- und vorgeschaltete Reaktionsvorrichtungen durchströmt werden. Somit erfolgt auch die Prozessführung in einem Oxidationsbetrieb nach einem Gegenstromprinzip, indem der auszukoppelnden Reaktionsvorrichtung das Reaktionsgas zugeführt wird und bei der gerade eingekoppelten Reaktionsvorrichtung das ausreagierte Reaktionsgas abgeführt wird. Im Sinne der Erfindung ist mit der "eingekoppelten" Reaktionsvorrichtung eine stoffflussmäßige Verbindung der Reaktionsvorrichtung innerhalb des Wasserstoff-Gewinnungssystems gemeint, so dass etwaige Leitungen zu und von der "eingekoppelten" Reaktionsvorrichtung geöffnet und verbunden werden.

In dem Oxidationsbetrieb ist es von besonderem Vorteil, wenn bei dem Verfahren in weiterer Ausgestaltung die Reaktionsmittel-Schichten der zweiten Reaktionsvorrichtung bei einer Temperatur zwischen 500°C und 900°C oxidiert werden. Dabei lässt sich die Gaszusammensetzung bei der Temperatur für die Oxidation bzw. für den Oxidationsbetrieb näherungsweise aus dem Baur-Glaessner-Diagramm bestimmen, wenn die Reaktionsmittel-Schichten aus Eisen oder einer Legierung auf Eisenbasis bestehen.

Die Erfindung sieht für das Verfahren bei einem Reduktionsbetrieb in weiterer Ausgestaltung vor, dass beim Umwandeln die wenigstens eine Reaktionsmittel-Schicht der zweiten Reaktionsvorrichtung reduziert wird und das der ersten Reaktionsvorrichtung zugeführte Reaktionsgas H₂ ist und das aus der Reaktionsgas-Abführleitung der dritten Reaktionsvorrichtung stammende und ausreagierte Reaktionsgas H₂O mit noch verbliebenen Anteilen an H₂ ist. Daher erfolgt auch die Prozessführung in dem Reduktionsbetrieb nach dem Gegenstromprinzip, indem der auszukoppelnden Reaktionsvorrichtung das Reaktionsgas zugeführt wird und bei der gerade eingekoppelten Reaktionsvorrichtung das ausreagierte Reaktionsgas abgeführt wird.

Besonders umweltfreundlich und CO₂-neutral ist es in weiterer Ausgestaltung des Verfahrens, wenn im Reduktionsbetrieb des Verfahrens das der ersten Reaktionsvorrichtung zugeführte Reaktionsgas aus Biogas oder aus Anteilen von Biogas hergestellt wird.

In dem Reduktionsbetrieb des Verfahrens ist es ferner vorteilhaft, wenn die Reaktionsmittel-Schichten der zweiten Reaktionsvorrichtung bei einer Temperatur zwischen 600°C und 1200°C reduziert werden. Die optimale Temperatur für die Reduktion kann auch hier aus dem Baur-Glaessner-Diagramm zumindest näherungsweise bestimmt werden, wenn die Reaktionsmittel-Schichten aus Eisen oder einer Legierung auf Eisenbasis bestehen.

Zur Einstellung der Reduktionsfähigkeit beim Umwandeln der Reaktionsmittel-Schichten sieht die Erfindung in weiterer Ausgestaltung des Verfahrens vor, dass beim Umwandeln der wenigstens eine Abstützungsboden über die ersten Querzuführleitungen der zweiten Reaktionsvorrichtung mit dem ersten Zusatz-Reaktionsgas versorgt werden, wobei das erste Zusatz-Reaktionsgas H₂ sein kann.

Zur Erwärmung durch partielle Oxidation sieht die Erfindung in weiterer Ausgestaltung des Verfahrens vor, dass beim Umwandeln der wenigsten eine Abstützungsboden der zweiten Reaktionsvorrichtung über die zweiten Querzuführleitungen mit dem zweiten Zusatz-Reaktionsgas versorgt werden, wobei das zweite Zusatz-Reaktionsgas O₂ sein kann.

Schließlich ist es in Ausgestaltung des Verfahrens von weiterem Vorteil, wenn die Reaktionsmittel-Schichten der zweiten Reaktionsvorrichtung bei einem Druck zwischen 1 bar und 10 bar umgewandelt werden.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der ein beispielhaftes und bevorzugtes Ausführungsbeispiel der
In der Zeichnung zeigt:
Figur 1 eine schematische Seitenansicht einer erfindungsgemäßen Reaktionsvorrichtung,
Figur 2 eine schematische Ansicht eines erfindungsgemäßen Wasserstoffgewinnungs-Systems für einen Reduktionsbetrieb und
Figur 3 eine schematische Ansicht des erfindungsgemäßen Wasserstoffgewinnungs-Systems für einen Oxidationsbetrieb,

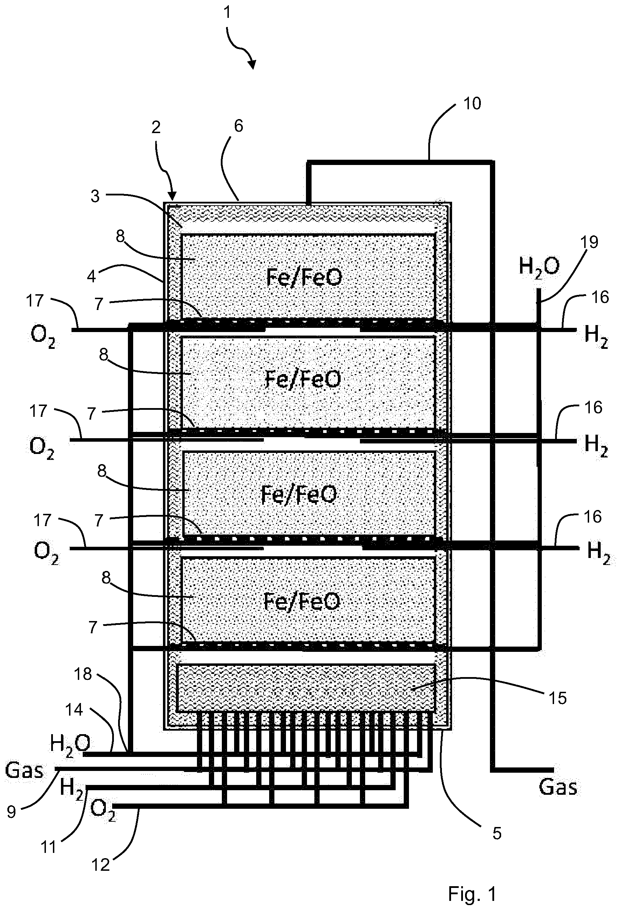

In Figur 1 ist eine erfindungsgemäße Reaktionsvorrichtung 1 in Seitenansicht dargestellt, welche zur ortsungebundenen Gewinnung von Wasserstoff ausgebildet ist. Die Reaktionsvorrichtung 1 weist ein Behältnis 2 mit einem Innenraum 3 auf. Dabei definieren bzw. bilden Seitenwände 4, eine Bodenwandung 5 und eine Deckenwandung 6 den Innenraum 3 des Behältnisses 2 aus. In dem in Figur 1 dargestellten Ausführungsbeispiel weist die Reaktionsvorrichtung 1 insgesamt vier Abstützungsböden 7 auf, wobei es ausreichend erscheint, wenn wenigstens ein Abstützungsboden vorgesehen ist. Die Abstützungsböden 7 sind jeweils beabstandet und übereinanderliegend zueinander zwischen der Bodenwandung 5 und der Deckenwandung 6 angeordnet und erstrecken sich jeweils quer zu der Bodenwandung 5 zwischen den Seitenwänden 4. Zusätzlich weist die Reaktionsvorrichtung 1 vier Reaktionsmittel-Schichten 8 auf, deren Anzahl der Anzahl an Abstützungsböden entspricht. In der Zeichnung sind die Reaktionsschichten mit Fe/FeO bezeichnet. Dabei steht Fe auch für Eisenlegierungen oder allgemein Metall und FeO allgemein für Oxidationsstufen dieses Metalls, wie z.B. auch für Fe₃O₄ und Fe₂O₃.

Wie der Figur 1 weiter zu entnehmen ist, weist die Reaktionsvorrichtung 1 zahlreiche Leitungen auf, die in den Innenraum 3 führen, im Innenraum 3 münden und zur Zuführung verschiedener Gase und/oder anderer Medien dienen. Entsprechend weist die Reaktionsvorrichtung 1 eine zur steuerbaren und/oder regelbaren Zuführung und Verteilung eines Reaktionsgases in den Innenraum 3 ausgebildete Reaktionsgas-Zuführleitung 9, welche im Innenraum 3 an der Bodenwandung 5 mündet, so dass zugeführtes Reaktionsgas den Innenraum 3 von der Bodenwandung 5 in Richtung der Deckenwandung 6 durchströmen kann. Zusätzlich weist die Reaktionsvorrichtung 1 eine zur Abführung des in dem Innenraum ausreagierten Reaktionsgases ausgebildete Reaktionsgas-Abführleitung 10 auf, welche an der Deckenwandung 6 angeordnet ist und dort das im Innenraum 3 ausreagierte Reaktionsgas abführt. Darüber hinaus weist die Reaktionsvorrichtung 1 eine zur steuerbaren und/oder regelbaren Zuführung und Verteilung eines ersten Zusatz-Reaktionsgases ausgebildete erste Zusatz-Reaktionsgas-Zuführleitung 11 auf, welche im Innenraum 3 an der Bodenwandung 5 mündet. Ferner weist die Reaktionsvorrichtung 1 eine zur steuerbaren und/oder regelbaren Zuführung und Verteilung eines zweiten Zusatz-Reaktionsgases ausgebildete zweite Zusatz-Reaktionsgas-Zuführleitung 12 auf, welche im Innenraum 3 und an der Bodenwandung 5 mündet. Schließlich weist die Reaktionsvorrichtung 1 eine zur steuerbaren und/oder regelbaren Zuführung und Verteilung eines dritten Zusatz-Reaktionsgases ausgebildete dritte Zusatz-Reaktionsgas-Zuführleitung 14 auf, welche auch wieder im Innenraum 3 an der Bodenwandung 5 mündet. Wie der Figur 1 ferner zu entnehmen ist, ist eine jeweilige Reaktionsmittel-Schicht 8 an einem zugeordneten Abstützungsboden 7 abgestützt angeordnet.

Das Behältnis 2 der Reaktionsvorrichtung 1 ist transportabel und isoliert ausgebildet und kann aus einem hochfesten, niedriglegierten Stahl bestehen. Ferner kann das Behältnis 2 eine Auskleidung mit einer hochisolierenden Masse aufweisen, wobei die hochisolierende Masse auch aus Blähkugeln oder aus einer Blähkugeln enthaltenen Feuerfestmasse gebildet sein kann.

Für den Betrieb der erfindungsgemäßen Reaktionsvorrichtung 1 ist eine jeweilige Reaktionsmittel-Schicht 8 reversibel wandelbar ausgebildet, so dass eine jeweilige Reaktionsmittel-Schicht 8 zum Beispiel von Metall zu Metalloxid und wieder zurück von Metalloxid zu Metall wiederholend umgewandelt werden kann. Insbesondere ist eine jeweilige Reaktionsmittel-Schicht 8 aus Eisen oder einer Legierung auf Eisenbasis ausgebildet, wobei diese Legierung beliebig oft und ohne Verlust einen Oxidations- und Reduktions-Prozess durchlaufen kann. Dabei kann eine jeweilige Reaktionsmittel-Schicht 8 als eine Schichtung aus Briketts und/oder Pellets ausgebildet sein. Zur Durchströmung des Behältnisses 2 mit Reaktionsgas und/oder Zusatz-Reaktionsgas in Richtung der Deckenwandung 6 ist ein jeweiliger Abstützungsboden 7 gasdurchlässig ausgebildet, wobei eine Möglichkeit der gasdurchlässigen Ausgestaltung darin bestehen kann, dass ein jeweiliger Abstützungsboden 7 plattenförmig mit partiellen Öffnungen oder siebartig ausgebildet ist.

Um den thermischen Belastungen Stand zu halten, besteht ein jeweiliger Abstützungsboden 7 aus einer oxidationsfesten Legierung. Beispielsweise kann ein jeweiliger Abstützungsboden 7 aus einer oxidationsbeständigen FeCrAl-Legierung bestehen. Ebenso aus Gründen der thermischen Belastung liegt auf der Bodenwandung 5 eine Keramikschüttung 15 auf, in welcher die Reaktionsgas-Zuführleitung 9, die erste Zusatz-Reaktionsgas-Zuführleitung 11, die zweite Zusatz-Reaktionsgas-Zuführleitung 12 und die dritte Zusatz-Reaktionsgas-Zuführleitung 14 münden.

Mehrere erste Querzuführleitungen 16 sind jeweils mit einem Abstützungsboden 7 verbunden. Die ersten Querzuführleitungen 16 sind zur zusätzlichen, steuerbaren und/oder regelbaren Einbringung des ersten Zusatz-Reaktionsgases in den Innenraum 3 ausgebildet. Die Reaktionsvorrichtung 1 weist ferner mehrere zweite Querzuführleitungen 17 auf, wobei eine jeweilige zweite Querzuführleitung 17 jeweils mit einem Abstützungsboden 7 verbunden ist. Die zweiten Querzuführleitungen 17 sind zur zusätzlichen, steuerbaren und/oder regelbaren Einbringung des zweiten Zusatz-Reaktionsgases in den Innenraum 3 ausgebildet. Die ersten Querzuführleitungen 16 und die zweiten Querzuführleitungen 17 münden an einem jeweiligen Abstützungsboden 7, wobei das jeweilige Zusatz-Reaktionsgas fein verteilt in den Innenraum 3 in Richtung der Deckenwandung 6 eingebracht wird. Dabei sind in dem dargestellten Ausführungsbeispiel lediglich die Abstützungsböden 7 mit den Querzuführleitungen 16 und 17 verbunden, welche oberhalb des direkt benachbart zu der Keramikschüttung 15 angeordneten Abstützungsbodens 7 angeordnet sind.

Wie ferner der Figur 1 zu entnehmen ist, weist die dritte Zusatz-Reaktionsgas-Zuführleitung 14 außerhalb des Behältnisses 2 eine Verzweigung 18 auf. Mit dieser Verzweigung sind die Abstützungsböden 7 verbunden, wobei die Verzweigung 18 zur zusätzlichen, steuerbaren und/oder regelbaren Einbringung des dritten Zusatz-Reaktionsgases in den Innenraum 3 ausgebildet ist. Schließlich sind die Abstützungsböden 7 jeweils mit einer dritte, für eine steuerbare und/oder regelbare Abstützungsboden-Kühlung mit Hilfe eines Kühlmediums ausgebildete Querzuführleitung 19 verbunden. Es versteht sich, dass eine erfindungsgemäße Ausführung des Reaktors nicht notwendig alle der erwähnten Zu- bzw. Ableitungen für die Zuführung von Reaktionsgas bzw. eines Kühl-/Heizmediums aufweisen muss.

Über in Figur 1 nicht dargestellte Ventile und Ventilsysteme ist dann eine gesteuerte und/oder geregelte Zuführung von Reaktionsgas und/oder Zusatz-Reaktionsgasen über die verschiedenen Zuführleitungen 9, 11, 12, 14 und die verschiedenen Querzuführleitungen 16, 17, 19 in einem vorbestimmten Verhältnis möglich.

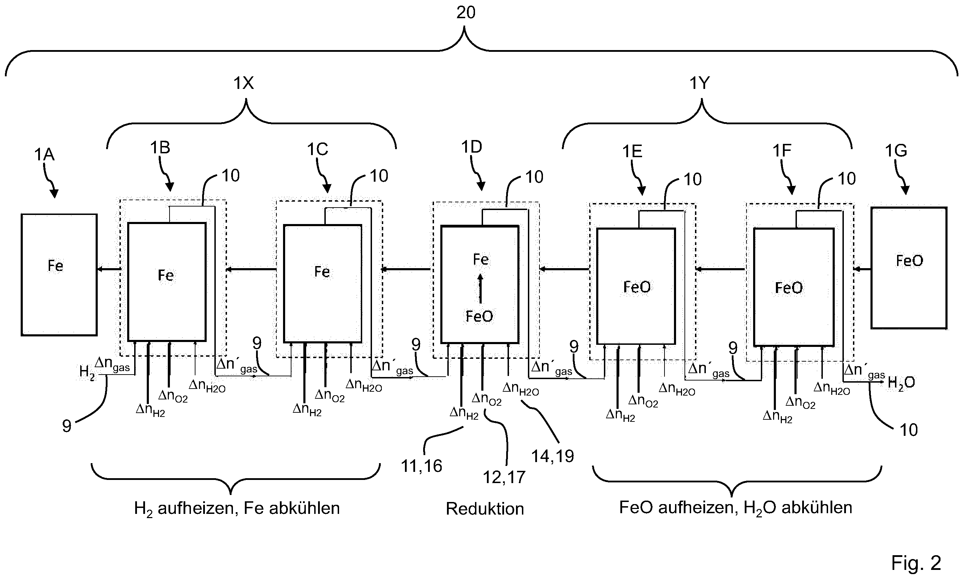

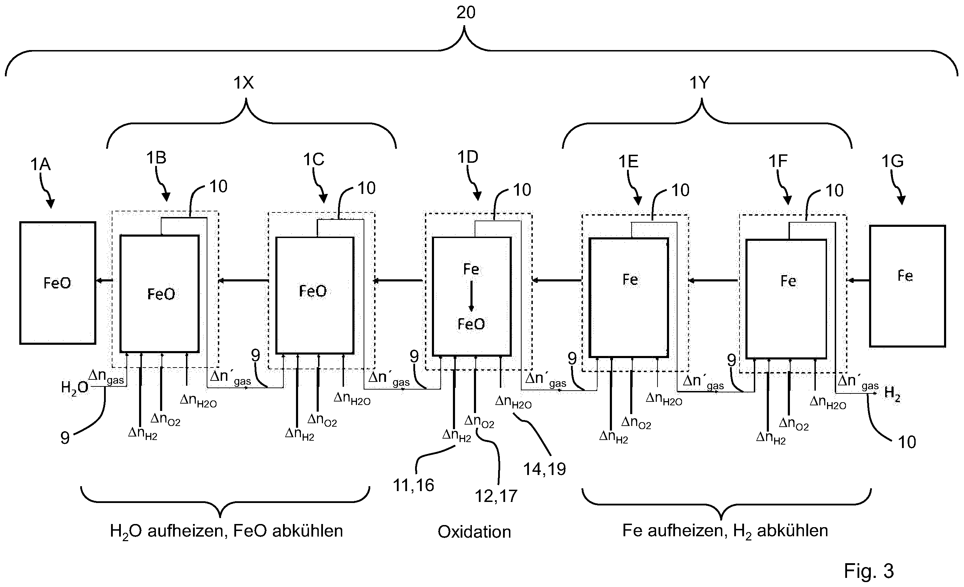

In den Figuren 2 und 3 ist jeweils ein erfindungsgemäßes Wasserstoff-Gewinnungssystem 20 gezeigt, wobei das in Figur 2 gezeigte Wasserstoff-Gewinnungssystem 20 in einem Reduktionsbetrieb betrieben wird, wohingegen das in Figur 3 gezeigte Wasserstoff-Gewinnungssystem 20 in einem Oxidationsbetrieb betrieben wird. Die einzelnen Reaktionsvorrichtungen 1 in den Figuren 2 und 3 sind identisch zu der vorstehend beschriebenen Reaktionsvorrichtung in Figur 1 aufgebaut und weisen jeweils die verschiedenen Zuführleitungen 9, 11, 12, 14 und die verschiedenen Querzuführleitungen 16, 17, 19 zur gesteuerten und/oder geregelten Zuführung von Reaktionsgas und/oder Zusatz-Reaktionsgasen auf, wobei aus Gründen der Übersichtlichkeit eine vereinfachte Darstellung ohne Querzuführleitungen gewählt wurde, eine Zuführung der Gase jedoch selbstverständlich nicht nur an der Bodenwandung 5, sondern gegebenenfalls zusätzlich über die Abstützungsböden 7 erfolgen kann.

Insgesamt weist das Wasserstoff-Gewinnungssystem 20 in den Figuren 2 und 3 jeweils fünf Reaktionsvorrichtungen 1B, 1C, 1D, 1E und 1F auf, wobei die Reaktionsvorrichtung 1A aus dem Wasserstoff-Gewinnungssystem 20 ausgekoppelt ist, den Prozess bereits durchlaufen hat und die Reaktionsmittel-Schichten 7 umgewandelt wurden, wohingegen die Reaktionsvorrichtung 1G vor der Einkopplung in das Wasserstoff-Gewinnungssystem 20 steht und die Reaktionsmittel-Schichten 7 noch nicht umgewandelt sind. Auch wenn das in den Figuren 2 und 3 gezeigte Wasserstoff-Gewinnungssystem 20 insgesamt fünf Reaktionsvorrichtungen 1 aufweist, so ist es denkbar, dass das Wasserstoff-Gewinnungssystem 20 wenigstens drei Reaktionsvorrichtungen 1 umfasst. Dabei werden die Reaktionsmittel-Schichten 7 der eine Reaktionsvorrichtung 1D umgewandelt, wohingegen die Reaktionsmittel-Schichten 7 der einen eingekoppelten Reaktionsvorrichtung 1Y (hier sind die Reaktionsvorrichtungen 1E und 1F zusammengefasst) zur Umwandlung vorbereitet werden, wohingegen die Reaktionsvorrichtung 1X (hier sind die Reaktionsvorrichtungen 1A und 1B zusammengefasst) zur Auskopplung aus dem Prozess vorbereitet und kontrolliert durch das einströmende Reaktionsgas abgekühlt wird, welches dabei gleichzeitig aufgeheizt wird.

Bei dem Wasserstoff-Gewinnungssystem 20 nach den Figuren 2 und 3 besteht bei dem Ausführungsbeispiel eine jeweilige Reaktionsmittel-Schicht 7 der einzelnen Reaktionsvorrichtungen 1B, 1C, 1D, 1E und 1F je nach Prozessführung entweder aus FeO oder Fe und wird entsprechend der Prozessführung während des Prozesses zu Fe oder FeO umgewandelt, wobei es im Rahmen der Erfindung vorgesehen ist, dass die jeweiligen Reaktionsmittel-Schichten 7 aus einer Legierung auf Eisenbasis bestehen.

Wie erwähnt, steht Fe allgemein für ein Metall und FeO für die die Oxidationsstufen dieses Metalls.

Bei beiden Prozessführungen (Reduktion und Oxidation) der Figuren 2 und 3 erfolgt die Zuleitung des Reaktionsgases Δn^{gas} über die Reaktionsgas-Zuführleitung 9 der auszukoppelnden Reaktionsvorrichtung 1B, wohingegen der gerade eingekoppelten Reaktionsvorrichtung 1F das ausreagierte Reaktionsgas Δn'^{gas} über die Reaktionsgas-Abführleitung 10 entnommen wird. Das Reaktionsgas Δn'^{gas} durchläuft somit zuerst die auszukoppelnde Reaktionsvorrichtung 1X bzw. 1B und 1C, dann die umzuwandelnde Reaktionsvorrichtung 1D und abschließend die noch umzuwandelnde Reaktionsvorrichtung 1Y bzw. 1E und 1F. Da das ausreagierte Reaktionsgas Δn'^{gas} entgegengesetzt zu den einzelnen Schritten der Umwandung bzw. der Ein- und Auskopplung der Reaktionsvorrichtungen (Vorbereitung der eingekoppelten Reaktionsvorrichtung, Umwandlung, Vorbereitung der auszukoppelnden Reaktionsvorrichtung) verwendet wird, erfolgt der Prozess nach dem Gegenstromprinzip. Entsprechend wird in den Figuren 2 und 3 das noch nicht ausreagierte, aber durch die Reaktionsmittel-Schichten 8 vorgewärmte Reaktionsgas Δn'^{gas} der Reaktionsvorrichtung 1B über die Reaktions-Abführleitung 10 der Reaktionsvorrichtung 1B und die Reaktionsgas-Zuführleitung 9 der Reaktionsvorrichtung 1C zu der Reaktionsvorrichtung 1C geführt. Dann wird das in der Reaktionsvorrichtung 1C weiter aufgeheizte Reaktionsgas Δn'^{gas} über die Reaktionsgas-Abführleitung 10 der

Reaktionsvorrichtung 1C und die Reaktionsgas-Zuführleitung 9 der Reaktionsvorrichtung 1D zu der Reaktionsvorrichtung 1D geführt. Während in den Reaktionsvorrichtungen 1B und 1C die in der Reaktionsmittel-Schichten 7 noch vom vorher erfolgtem Reduktionsprozess enthaltene Wärme zur Aufheizung des Reaktionsgases genutzt wird, erfolgt in der Reaktionsvorrichtung 1D die eigentliche Umwandlung der Reaktionsmittelschichten 7. Das in der Reaktionsvorrichtung 1D ausreagierte Reaktionsgas Δn'^{gas} wird dann über die Reaktionsgas-Abführleitung 10 der Reaktionsvorrichtung 1D und die Reaktionsgas-Zuführleitung 9 der Reaktionsvorrichtung 1E zu der Reaktionsvorrichtung 1E geführt. Dann wird das in der Reaktionsvorrichtung 1E ausreagierte Reaktionsgas Δn'^{gas} über die Reaktionsgas-Abführleitung 10 der Reaktionsvorrichtung 1E und die Reaktionsgas-Zuführleitung 9 der Reaktionsvorrichtung 1F zu der Reaktionsvorrichtung 1F geführt. Schließlich wird das in der Reaktionsvorrichtung 1E ausreagierte Reaktionsgas Δn'^{gas} dem Prozess über die Reaktions-Abführleitung 10 der Reaktionsvorrichtung 1F abgeführt. Die Wärme des in der Reaktionsvorrichtung 1D ausreagierten Reaktionsgases Δn'^{gas} wird zur Aufheizung der Reaktionsmittel-Schichten 7 der Reaktionsvorrichtungen 1E und 1F genutzt.

Bei dem in den Figuren 2 und 3 gezeigten Wasserstoff-Gewinnungssystem 20 können die Reaktionsbehälter 1B und 1C im Sinne der Erfindung als ein erster Reaktionsbehälter 1X, der Reaktionsbehälter 1D als ein zweiter Reaktionsbehälter 1D und die Reaktionsbehälter 1E und 1F als ein dritter Reaktionsbehälter 1Y betrachtet werden. Dementsprechend ist die Reaktionsgas-Zuführleitung 9 der zweiten Reaktionsvorrichtung 1D mit der Reaktionsgas-Abführleitung 10 der ersten Reaktionsvorrichtung 1X verbunden, wobei die Reaktionsgas-Zuführleitung 9 der dritten Reaktionsvorrichtung 1Y mit der Reaktionsgas-Abführleitung 10 der zweiten Reaktionsvorrichtung 1D verbunden ist.

Für die Verfahrensführung des in den Figuren 2 und 3 dargestellten Wasserstoff-Gewinnungssystems 20 gilt im Sinne der Erfindung allgemein, dass die erste Reaktionsvorrichtung 1X (also die Reaktionsvorrichtungen 1B und 1C) zum Auskoppeln aus dem System 20 vorbereitet wird. Gleichzeitig werden bei der zweiten Reaktionsvorrichtung 1D die Reaktionsmittel-Schichten 7 umgewandelt. Ebenso gleichzeitig werden bei der dritten Reaktionsvorrichtung 1Y (also die Reaktionsvorrichtungen 1E und 1F) die Reaktionsmittel-Schichten 7 zum Umwandeln vorbereitet. Für den Prozess kann jeder einzelnen Reaktionsvorrichtung 1B, 1C, 1D, 1E, 1F über die erste Zusatz-Reaktionsgas-Zuführleitung 11 das erste Zusatz-Reaktionsgas Δn_{H2} gesteuert und/oder geregelt zugeführt werden. Ebenso kann jeder einzelnen Reaktionsvorrichtung 1B, 1C, 1D, 1E, 1F über die zweite Zusatz-Reaktionsgas-Zuführleitung 12 das zweite Zusatz-Reaktionsgas Δn_{O2} gesteuert und/oder geregelt zugeführt werden. Es besteht ferner die Möglichkeit, jeder einzelnen Reaktionsvorrichtung 1B, 1C, 1D, 1E, 1F das dritte Zusatz-Reaktionsgas Δn_{H2O} gesteuert und/oder geregelt über die dritte Zusatz-Reaktionsgas-Zuführleitung 14 zuzuführen. Es sei angemerkt, dass aus Gründen der Übersichtlichkeit lediglich für die Reaktionsvorrichtung 1D die einzelnen Zuführleitungen mit Bezugszeichen versehen sind, diese Zuführleitungen aber selbstverständlich auch bei den anderen Reaktionsvorrichtungen 1B, 1C, 1E, 1F vorhanden sind. Optional besteht ferner die Möglichkeit, Zusatz-Reaktionsgase Δn_{H2}, Δn_{O2} oder Δn_{H2O} über die in den Figuren 1 und 2 nicht dargestellte Querzuführleitungen den einzelnen Reaktionsvorrichtungen 1B, 1C, 1D, 1E, 1F zuzuführen.

Die drei Reaktionsvorrichtungen 1X, 1D und 1Y werden derart in Reihe geschaltet, dass die Reaktionsgas-Zuführleitung 9 der zweiten Reaktionsvorrichtung 1D mit der Reaktionsgas-Abführleitung 10 der ersten Reaktionsvorrichtung 1X verbunden wird und die Reaktionsgas-Zuführleitung 9 der dritten Reaktionsvorrichtung 1Y mit der Reaktionsgas-Abführleitung 10 der zweiten Reaktionsvorrichtung 1D verbunden wird, wodurch die zweite Reaktionsvorrichtung 1D mit ausreagiertem Reaktionsgas Δn'^{gas} der ersten Reaktionsvorrichtung 1X versorgt wird und die dritte Reaktionsvorrichtung 1Y mit ausreagiertem Reaktionsgas Δn'^{gas} der zweiten Reaktionsvorrichtung 1D versorgt wird. Bei dem Vorbereiten zum Auskoppeln der ersten Reaktionsvorrichtung 1X wird das Reaktionsgas Δn^{gas} mit Hilfe der Reaktionsmittel-Schichten 7 aufgeheizt. Dadurch kühlt das Reaktionsgas ab und entfernt beim Verlassen möglichst wenig Wärme aus dem System. Ferner werden bei dem Vorbereiten zum Umwandeln die Reaktionsmittel-Schichten 7 der dritten Reaktionsvorrichtung 1Y mit Hilfe des ausreagierten Reaktionsgases Δn'^{gas} der zweiten Reaktionsvorrichtung 1D aufgeheizt. Dabei kühlt das Reaktionsgas ab, so dass das austretende Reaktionsgas wenig Wärme aus dem System entfernt.

Für den Reduktionsbetrieb nach Figur 2 gilt, dass beim Umwandeln die Reaktionsmittel-Schichten 7 der zweiten Reaktionsvorrichtung 1D reduziert werden, wobei das der ersten Reaktionsvorrichtung 1X zugeführte Reaktionsgas H₂ ist und das aus der Reaktionsgas-Abführleitung 10F der dritten Reaktionsvorrichtung 1Y stammende und ausreagierte Reaktionsgas H₂O mit Anteilen an H₂ ist. Dabei kann das der ersten Reaktionsvorrichtung 1X zugeführte Reaktionsgas aus Biogas hergestellt sein oder neben H₂ auch Anteile an Biogas enthalten. Im Reduktionsbetrieb werden die Reaktionsmittel-Schichten 7 der zweiten Reaktionsvorrichtung 1D bei einer Temperatur zwischen 600°C und 1200°C reduziert. Optional können im Reduktionsbetrieb beim Umwandeln die Abstützungsböden 7 über die ersten Querzuführleitungen 16 der zweiten Reaktionsvorrichtung 1D mit dem ersten Zusatz-Reaktionsgas versorgt werden, wobei das erste Zusatz-Reaktionsgas H₂ ist. Ebenso können optional beim Umwandeln die Abstützungsböden 7 der zweiten Reaktionsvorrichtung 1D über die zweiten Querzuführleitungen 17 mit dem zweiten Zusatz-Reaktionsgas versorgt werden, wobei das zweite Zusatz-Reaktionsgas O2 ist. Dies kann bevorzugt oberhalb der Zone, in welcher die Reaktion stattfindet, eingeleitet werden, um diese für die Reaktion aufzuheizen, ohne dass in der darunterliegenden Reaktionszone die Reduktion durch das gebildete H₂O-Gas gehemmt wird.

Vor dem Einkoppeln im Reduktionsbetrieb (Reaktor 1G) kann das FeO der Reaktionsmittel-Schichten 7 in der Reduktionslinie durch heißes H₂ (Vorwärmgas) erwärmt werden, um Kondensation und Hydratbildung zu vermeiden, denn unterhalb von ca. 300°C erfolgt aus kinetischen Gründen keine Reduktion. Dabei kann ferner das hierfür genutzte H₂ indirekt in den Abstützungsböden aufgeheizt werden und zur Vorwärmung durch 1G geleitet werden, wobei das dann (in 1G) abgekühlte H₂ zurück an den Anfang geführt wird. H₂ kann auch in geschlossenen Leitungen durch die Reaktionsvorrichtungen geleitet werden, um das H₂ vorteilhaft für die Nutzung als Reaktionsgas bzw. Vorwärmgas vorzubereiten bzw. um die Reaktionsmittel-Schichten und Abstützungsböden zur Vermeidung von Überhitzung zu kühlen.

Für den Oxidationsbetrieb nach Figur 3 gilt, dass beim Umwandeln die Reaktionsmittel-Schichten 7 der zweiten Reaktionsvorrichtung 1D oxidiert werden, wobei das der ersten Reaktionsvorrichtung 1X zugeführte Reaktionsgas H₂O (Dampf) ist und das aus der Reaktionsgas-Abführleitung 10E der dritten Reaktionsvorrichtung 1Y stammende und ausreagierte Reaktionsgas H₂ mit Restanteilen an H₂O entsprechend dem thermodynamischen Gleichgewicht ist. Ferner werden im Oxidationsbetrieb die Reaktionsmittel-Schichten 7 der zweiten Reaktionsvorrichtung 1D bei einer Temperatur zwischen 500°C und 900°C oxidiert. In Oxidationslinie kann H₂ am Ende getrocknet werden und dann im Teilstrom in den Abstützungsböden bzw. den Reaktionsmittel-Schichten aufgeheizt zur Fe-Vorheizung (Vermeidung von Kondensation) vor der Einkopplung (Reaktor 1G) verwendet werden.

Sowohl im Reduktionsbetrieb als auch im Oxidationsbetrieb werden die Reaktionsmittel-Schichten 7 der zweiten Reaktionsvorrichtung 1D bei einem Druck zwischen 1 bar und 10 bar umgewandelt.

Vorstehend wurde ein Verfahren und eine Vorrichtung für die Lagerung und den Transport von Metall sowie Metalloxyde zwecks Gewinnung von Wasserstoff beschrieben. Die Vorrichtung ist nach Art eines Behälters ausgebildet, welcher zusätzlich transportabel und isoliert ausgebildet ist. Der Behälter weist Abstützungsböden auf, welche jeweils Schichten mit Metall bzw. Metalloxid trägt. An der Bodenwandung des Behälters wird Gas mit einer gleichmäßigen Verteilung zugeführt und durchströmt den Behälter in Richtung der Deckelwand, an welcher das ausreagierte Gas aus dem Behälter entweicht. Bei dem Behälter ist unterhalb eines jeden Abstützungsbodens die Möglichkeit einer Gasquerverteilung geben, wobei mit Hilfe der Abstützungsböden die Festigkeitsanforderungen an die Schichten aus Metall bzw. Metalloxid reduziert werden, wenn die Schichten zum Beispiel aus Pellets bestehen. In einem Reduktionsbetrieb wird der Behälter von H₂ durchströmt, wobei Metalloxid zu Metall reduziert wird, wohingegen in einem Oxidationsbetrieb der Behälter von H₂O durchströmt wird, so dass H₂ mit geringeren Anteilen an H₂O entsteht. Die Anteile der dem Behälter zugeführten Gase werden nach dem Baur-Glaessner-Diagramm thermodynamisch bestimmt.

Erfindungsgemäß ist die Vorrichtung bzw. die Reaktionsvorrichtung besonders geeignet für einen bilokalen Betrieb, wobei kein Schüttguthandling bzw. ein Handling der Schichten aus Metall oder Metalloxid erforderlich ist, was die Festigkeitsanforderungen der Pellets bzw. der Briketts in vorteilhafter Weise zusätzlich reduziert. In dem Reduktionsbetrieb besteht für eine Erwärmung durch partielle Oxidation die Möglichkeit, an der Bodenwandung und an jedem Abstützungsboden O₂ zuzuführen. Ebenso besteht an der Bodenwandung und an den Abstützungsböden die Möglichkeit einer H₂-Zuführung, um die Reduktionsfähigkeit des Gases im Behälter einzustellen. Dabei ist die Möglichkeit einer Gaseinleitung in den Abstützungsböden zum Heizen (beispielsweise mit Dampf) oder zum Kühlen (mit beispielsweise Dampf und/oder Wasser) gegeben.

Insgesamt muss selbstverständlich die Kondenswasserbildung bzw. Hydratbildung vermieden werden, weshalb ein Vorheizen/Restkühlen mittels erwärmtem H₂ sowohl durch direktes Durchströmen der Reaktionsschicht als auch indirekt über die Abstützungsböden oder geschlossene Rohrleitungen in die Reaktionsmittel-Schichten erfolgen kann.

Die erfindungsgemäße Reaktionsvorrichtung und das erfindungsgemäße Wasserstoff-Gewinnungssystem ermöglichen zusammen mit dem erfindungsgemäßen Verfahren eine Art eines Eisen-Dampf-Prozesses, wobei der Prozess nach dem Gegenstromprinzip energieoptimiert betrieben wird. Bei dem erfindungsgemäßen System bzw. Wasserstoff-Gewinnungssystem werden mehrere Behälter (mindestens 3 mit einem Gewicht von beispielsweise 500 kt Eisen) derart miteinander gekoppelt, dass ein energieeffizienter Gegenstrom-Betrieb möglich ist und an jedem Behälter die Möglichkeit zur Gaseinleitung für eine energieeffiziente Temperaturführung gegeben ist. Die Behälter werden am Ende bzw. am Anfang des Systems schrittweise im Gegenstrom zum Gas ein- bzw. ausgekoppelt. Vor dem Einkoppeln kann das FeO der Reaktionsmittel-Schichten in der Reduktionslinie durch heißes H₂ erwärmt werden, um Kondensation (sowohl bei der Oxidation wie bei der Reduktion enthält das ausströmende Gas Anteile an H₂O) zu vermeiden, denn unterhalb von ca. 300°C erfolgt keine Reduktion und eine beim Vorwärmen zu vermeidende H₂O-Bildung. Dabei kann ferner H₂ indirekt in den Abstützungsböden geheizt werden, wobei abgekühltes H₂ zurück an Anfang den Anfang geführt wird. In der Oxidationslinie kann H₂ am Ende getrocknet werden und dann im Teilstrom in den Abstützungsböden aufgeheizt und zu Fe-Vorheizung vor der Einkopplung verwendet werden. Auch dieses H2 landet am Ende wieder im H2-Hauptstrom, welches das Produkt darstellt (Oxidationsbetrieb) bzw. in das System zur Reduktion (Reduktionsbetrieb) geführt wird. Bei dem Start Reduktion kann somit mit warmem H₂ vorgewärmt werden, wobei der Reduktionsstart mit heißem H₂ erfolgt. Bei der Oxidation erfolgt ein Vorwärmen mit warmen H₂, wobei dann der Oxidationsstart mit heißem Dampf erfolgt.

Für einen bilokalen Betrieb des Systems bzw. Wasserstoff-Gewinnungssystem sieht die Erfindung vor, dass das System mit beispielsweise 500 kt Eisen (liefert 271 MNm³ H₂) auf einer offshore-fähigen Plattform angeordnet ist, wobei die Plattform mit den Reaktionsvorrichtungen im Pendelbetrieb zwischen einem Ort mit hoher regenerativer Energie zum Reduzieren und einem Bestimmungsort zum Oxidieren bzw. zur H₂-Gewinnung verschoben bzw. verschifft werden. Die Reaktionsmittel-Schichten sind ein Metall-/Metalloxid-Stoffsystem auf Basis von beispielsweise FeMn oder FeZn. Dabei kann eine jeweilige Reaktionsmittel-Schicht in Form von geschichtetem Pulver, Mikropellets, Pellets, Briketts in einer Größe von ca. 15mm oder sogar Sinter ausgebildet sein. Ferner kann eine Zustellung des Behälters aus hochisolierender Masse vorgesehen sein, bei welcher zum Beispiel Blähkugeln für eine thermische Isolierung beigemengt sind. Die Dicke der Isolierschicht kann 100-300mm betragen. Ferner können die Abstützungsböden aus einer oxidationsfesten Legierung, wie zum Beispiel Fe-Cr-Al-X bestehen, wohingegen der Behälter aus niedriglegiertem HSLA gebildet sein kann. An der Bodenwandung der Reaktionsvorrichtung kann eine Keramikschüttung für eine gleichmäßige Gasdurchmischung vorgesehen sein. Für die Prozessführung betragen ferner die Temperatur 500°C- 900°C für die Oxidation und 600°C-1200°C für die Reduktion, wobei die Prozessführung bei einem Druck von 1-10bar erfolgt. Insbesondere kann der Reduktionsbetrieb auch mit H₂/Biogas mit bis zu 100% Biogas an Orten mit viel Biogas erfolgen.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann naheliegt.

### Bezugszeichenliste

- 1: Reaktionsvorrichtung
- 2: Behältnis
- 3: Innenraum
- 4: Seitenwände
- 5: Bodenwandung
- 6: Deckenwandung
- 7: Abstützungsböden
- 8: Reaktionsmittel-Schichten
- 9: Reaktionsgas-Zuführleitung
- 10: Reaktionsgas-Abführleitung
- 11: erste Zusatz-Reaktionsgas-Zuführleitung
- 12: zweite Zusatz-Reaktionsgas-Zuführleitung
- 14: dritte Zusatz-Reaktionsgas-Zuführleitung
- 15: Keramikschüttung
- 16: erste Querzuführleitung
- 17: zweite Querzuführleitung
- 18: Verzweigung
- 19: dritte Querzuführleitung
- 20: Wasserstoff-Gewinnungssystem

## Patentansprüche

1. Reaktionsvorrichtung (1) zur Gewinnung von Wasserstoff, aufweisend
- ein transportabel und isoliert ausgebildetes Behältnis (2) mit einem Innenraum (3), welcher von Seitenwände (4), einer Bodenwandung (5) und einer Deckenwandung (6) begrenzt ist,
- wenigstens eine Reaktionsmittel-Schicht (8), welche zwischen Metall und Metalloxid reversibel wandelbar, wiederverwendbar und gasdurchströmbar ausgebildet ist und welche sich quer zur Bodenwandung (5) zwischen den Seitenwänden (4) erstreckt,
- eine zur steuerbaren und/oder regelbaren Zuführung und Verteilung eines Reaktionsgases in den Innenraum (3) ausgebildete Reaktionsgas-Zuführleitung (9), welche an oder im Bereich der Bodenwandung (5) mündet,
- eine zur Abführung des in dem Innenraum (3) ausreagierten Reaktionsgases ausgebildete Reaktionsgas-Abführleitung (10), welche an oder im Bereich der Deckenwandung (6) angeordnet ist,
- eine zur steuerbaren und/oder regelbaren Zuführung und Verteilung eines ersten Zusatz-Reaktionsgases ausgebildete erste Zusatz-Reaktionsgas-Zuführleitung (11), welche an oder im Bereich der Bodenwandung (5) mündet,
- eine zur steuerbaren und/oder regelbaren Zuführung und Verteilung eines zweiten Zusatz-Reaktionsgases ausgebildete zweite Zusatz-Reaktionsgas-Zuführleitung (12), welche an oder im Bereich der Bodenwandung (5) mündet, und
- eine zur steuerbaren und/oder regelbaren Zuführung und Verteilung eines dritten Zusatz-Reaktionsgases ausgebildete dritte Zusatz-Reaktionsgas-Zuführleitung (14), welche an oder im Bereich der Bodenwandung (5) mündet.

2. Reaktionsvorrichtung (1) nach Anspruch 1, wobei einer Reaktionsmittel-Schicht (8) der wenigstens einen Reaktionsmittel-Schicht (8) ein Abstützungsboden (7) zugeordnet ist, welcher die wenigstens eine Reaktionsmittel-Schicht (8) abstützend und quer zur Bodenwandung (5) lagert, wobei die Anzahl der Abstützungsböden (7) der Anzahl an Reaktionsmittel-Schichten (8) entspricht, und wobei bei mehr als einer Reaktionsmittel-Schicht (8) die Abstützungsböden (7) zwischen der Bodenwandung (5) und der Deckenwandung (6) beabstandet und übereinanderliegend zueinander angeordnet sind.

3. Reaktionsvorrichtung (1) nach Anspruch 2, wobei wenigstens ein Abstützungsboden (7) mit einer ersten Querzuführleitung (16) verbunden ist und zur zusätzlichen, steuerbaren und/oder regelbaren Einbringung des ersten Zusatz-Reaktionsgases in den Innenraum (3) ausgebildet ist.

4. Reaktionsvorrichtung (1) nach Anspruch 2 oder 3, wobei wenigstens ein Abstützungsboden (7) mit einer zweiten Querzuführleitung (17) verbunden ist und zur zusätzlichen, steuerbaren und/oder regelbaren Einbringung des zweiten Zusatz-Reaktionsgases in den Innenraum (3) ausgebildet ist.

5. Reaktionsvorrichtung (1) nach einem der Ansprüche 2 bis 4, wobei die dritte Zusatz-Reaktionsgas-Zuführleitung (19) mit wenigstens einem Abstützungsboden (7) verbunden ist, wobei der wenigstens eine Abstützungsboden (7) zur zusätzlichen, steuerbaren und/oder regelbaren Einbringung des dritten Zusatz-Reaktionsgases in den Innenraum (3) ausgebildet ist.

6. Reaktionsvorrichtung (1) nach einem der Ansprüche 2 bis 5, wobei der wenigstens eine Abstützungsboden (7) mit einer dritten, für eine steuerbare und/oder regelbare Abstützungsboden-Kühlung mit Hilfe eines Kühlmediums ausgebildete Querzuführleitung (19) verbunden ist.

7. Reaktionsvorrichtung (1) nach einem der Ansprüche 2 bis 6, wobei der wenigstens eine Abstützungsboden (7) aus einer oxidationsfesten Legierung besteht.

8. Reaktionsvorrichtung (1) nach einem der Ansprüche 2 bis 7, wobei der wenigstens eine Abstützungsboden (7) eine oxidationsfeste Beschichtung aus einem keramischen Werkstoff mit einem Silikat-Anteil von weniger als 11,35 Vol.-% aufweist.

9. Reaktionsvorrichtung (1) nach einem der vorhergehenden Ansprüche, wobei eine jeweilige Reaktionsmittel-Schicht (8) als eine Schichtung aus Briketts und/oder Pellets aus Eisen oder einer Legierung auf Eisenbasis ausgebildet ist.

10. Reaktionsvorrichtung (1) nach einem der vorhergehenden Ansprüche, wobei auf der Bodenwandung (5) eine Keramikschüttung (15) aufliegt, in welcher die Reaktionsgas-Zuführleitung (9) und/oder die erste Zusatz-Reaktionsgas-Zuführleitung (11) und/oder die zweite Zusatz-Reaktionsgas-Zuführleitung (12) und/oder die dritte Zusatz-Reaktionsgas-Zuführleitung (14) münden/mündet.

11. Wasserstoff-Gewinnungssystem (20), welches wenigstens drei Reaktionsvorrichtungen (1; 1A, 1B, 1C, 1D, 1E, 1F) nach einem der Ansprüche 1 bis 10 aufweist, wobei die Reaktionsgas-Zuführleitung (9D) der zweiten Reaktionsvorrichtung (1D) mit der Reaktionsgas-Abführleitung (10C) der ersten Reaktionsvorrichtung (1X) verbunden ist, und wobei die Reaktionsgas-Zuführleitung (9E) der dritten Reaktionsvorrichtung (1Y) mit der Reaktionsgas-Abführleitung (10D) der zweiten Reaktionsvorrichtung (1D) verbunden ist.

12. Verfahren zur Gewinnung von Wasserstoff durch Umwandeln von wenigstens einer Reaktionsmittel-Schicht (8), wobei das Verfahren mit wenigstens drei Reaktionsvorrichtungen (1A, 1B, 1C, 1D, 1E) nach einem der Ansprüche 1 bis 10 als ein Wasserstoff-Gewinnungssystem (20) nach Anspruch 11 betrieben wird,
wobei eine erste Reaktionsvorrichtung (1X) der wenigstens drei Reaktionsvorrichtungen (1A, 1B, 1C, 1D, 1E) zum Auskoppeln aus dem System (20) vorbereitet wird,
wobei bei einer zweiten Reaktionsvorrichtung (1D) der wenigstens drei Reaktionsvorrichtungen (1A, 1B, 1C, 1D, 1E) die wenigstens eine Reaktionsmittel-Schicht (8) umgewandelt wird,
wobei bei einer dritten Reaktionsvorrichtung (1Y) der wenigstens drei Reaktionsvorrichtungen (1A, 1B, 1C, 1D, 1E) die wenigstens eine Reaktionsmittel-Schicht (8) zum Umwandeln vorbereitet wird,
wobei zum Umwandeln über die erste Zusatz-Reaktionsgas-Zuführleitung (11D) der zweiten Reaktionsvorrichtung (1D) das erste Zusatz-Reaktionsgas gesteuert und/oder geregelt zugeführt wird,
wobei zum Umwandeln über die zweite Zusatz-Reaktionsgas-Zuführleitung (12D) der zweiten Reaktionsvorrichtung (1D) das zweite Zusatz-Reaktionsgas gesteuert und/oder geregelt zugeführt werden/wird, und
wobei die wenigstens drei Reaktionsvorrichtungen (1A, 1B, 1C, 1D, 1E) derart in Reihe geschaltet werden, dass die Reaktionsgas-Zuführleitung (9D) der zweiten Reaktionsvorrichtung (1D) mit der Reaktionsgas-Abführleitung (10C) der ersten Reaktionsvorrichtung (1X) verbunden wird und die Reaktionsgas-Zuführleitung (9E) der dritten Reaktionsvorrichtung (1Y) mit der Reaktionsgas-Abführleitung (10D) der zweiten Reaktionsvorrichtung (1D) verbunden wird, wodurch die zweite Reaktionsvorrichtung (1D) mit aufgeheiztem Reaktionsgas der ersten Reaktionsvorrichtung (1X) versorgt wird und die dritte Reaktionsvorrichtung (1Y) mit ausreagiertem Reaktionsgas der zweiten Reaktionsvorrichtung (1D) versorgt wird.

13. Verfahren nach Anspruch 12, wobei bei dem Vorbereiten zum Auskoppeln der ersten Reaktionsvorrichtung (1X) das Reaktionsgas mit Hilfe der wenigstens einen Reaktionsmittel-Schicht (8) aufgeheizt wird und damit die Reaktionsmittel-Schicht abgekühlt wird, und/oder wobei bei dem Vorbereiten zum Umwandeln die wenigstens eine Reaktionsmittel-Schicht (8) der dritten Reaktionsvorrichtung (1Y) mit Hilfe des ausreagierten Reaktionsgases der zweiten Reaktionsvorrichtung (1D) aufgeheizt werden.

14. Verfahren nach Anspruch 12 oder 13, wobei beim Umwandeln die wenigstens eine Reaktionsmittel-Schicht (8) der zweiten Reaktionsvorrichtung (1D) oxidiert wird, wobei das der ersten Reaktionsvorrichtung (1X) zugeführte Reaktionsgas H₂O ist und das aus der Reaktionsgas-Abführleitung (10F) der dritten Reaktionsvorrichtung (1Y) stammende und ausreagierte Reaktionsgas H₂ mit noch verbliebenen Anteilen an H₂O ist.

15. Verfahren nach Anspruch 12 oder 13, wobei beim Umwandeln die wenigstens eine Reaktionsmittel-Schicht (8) der zweiten Reaktionsvorrichtung (1D) reduziert wird und das der ersten Reaktionsvorrichtung (1X) zugeführte Reaktionsgas H₂ ist und das aus der Reaktionsgas-Abführleitung (10F) der dritten Reaktionsvorrichtung (1Y) stammende und ausreagierte Reaktionsgas H₂O mit noch verbliebenen Anteilen an H₂ ist.
